# EUROPÄISCHE PATENTSCHRIFT

(11) **EP 3 110 684 B1**
(45) Veröffentlichungstag und Bekanntmachung des Hinweises auf die Patenterteilung: **20.01.2021**
(21) Anmeldenummer: 15711651.8
(22) Anmeldetag: 24.02.2015
(51) Int. Cl.: B62D 65/16, B62D 65/02

(54) **VERFAHREN UND MONTAGEANLAGE ZUM AUTOMATISCHEN FÜGEN VON BAUTEILEN**
METHOD AND ASSEMBLY INSTALLATION FOR AUTOMATICALLY JOINING COMPONENTS
PROCÉDÉ ET INSTALLATION DE MONTAGE POUR ASSEMBLER AUTOMATIQUEMENT DES COMPOSANTS

(30) Priorität: 25.02.2014 DE 202014001697 U
(43) Veröffentlichungstag der Anmeldung: 04.01.2017
(73) Patentinhaber: Engelbreit & Sohn GmbH CNC-Zerspannung, 90552 Röthenbach (DE)
(72) Erfinder: ENGELBREIT, Philipp, 91207 Lauf (DE)
(74) Vertreter: FDST Patentanwälte
(86) Internationale Anmeldenummer: PCT/EP2015/000410
(87) Internationale Veröffentlichungsnummer: WO 2015/128073

(56) Entgegenhaltungen:
- WO-A1-2014/009271
- DE-A1- 3 302 177
- DE-A1- 4 326 153
- DE-A1-102010 041 356
- DE-A1-102012 002 722
- KR-A- 20100 042 872
- US-A- 5 148 591

## Beschreibung

Die Erfindung betrifft ein Verfahren zum automatischen Fügen von Bauteilen gemäß dem Oberbegriff des Anspruchs 1. Sie betrifft weiter eine Montageanlage zur Durchführung des Verfahrens. Ein solches Verfahren und eine entsprechende Vorrichtung sind beispielsweise aus der DE 10 2012 002 722 A1 bekannt. Unter den Bautelen wird hierbei insbesondere ein kraftfahrzeugseitiger Kühlergrill verstanden, der mit einem Chromrahmen und/oder eines solchen mit einer Chromleiste gefügt werden soll.

Insbesondere aus der Automobilindustrie ist es bekannt, je nach Ausstattungsvariante eines Kraftfahrzeugmodells funktionelle Kunststoffbauteile mit Chrom- und/oder Lackapplikationen zu versehen. Diese Applikationen sind in der Regel ebenfalls Kunststoffbauteile, die mit einer Chrom- und/oder Lackschicht überzogen sind und an dem üblicherweise unbehandelten, funktionellen Kunststoffbauteil im Sichtbereich angebracht werden. Die Applikationen sind dabei geometrisch derart ausgeführt, dass optisch der Eindruck entsteht, dass das funktionelle Kunststoffbauteil selbst an der dafür vorgesehen Stelle mit eben dieser Chrom- und/oder Lackschicht überzogen ist. Diese Maßnahme hat den Vorteil, dass im Rahmen der Variantenbildung nur die Applikationen angepasst werden müssen, während das zumeist größere funktionelle Kunststoffbauteil als Basisteil unverändert verwendet werden kann. Die Befestigung der Applikationen an dem funktionellen Kunststoffbauteil zu einem Gesamtbauteil erfolgt an exponierten Stellen mittels verrasten und/oder verpressen. Bisher ist nur bekannt, dass diese Fügeoperationen manuell erfolgen und damit zusätzlich zu dem damit verbundenen hohen Aufwand, insbesondere Kostenaufwand, eine gewisse Fehlerquote bzw. Qualitätseinbuße in Kauf genommen wird.

Die eingangs genannte DE 10 2012 002 722 A1 offenbart ein Verfahren und eine Vorrichtung zur Serienfertigung von Fahrzeugbaugruppen, insbesondere von Lenkradbaugruppen. Zur Montage eines Bauteils der Baugruppe an einem fahrzeugseitigen Träger weisen das Bauteil und/oder der Träger Lagerteile auf, welche bei einer Montage zueinander ausgerichtet werden. Die Position von Träger und Bauteil zueinander ist hierbei durch Lagereinheiten der Lagerteile festgelegt, wodurch eine genaue Ausrichtung der Bauteile auch bei großen Fertigungstoleranzen der Bauteile erfolgen soll.

Aus der DE 10 2010 041 356 A1 ist ein Verfahren zum Verbinden von Bauteilen, insbesondere Fahrzeugkarosseriebauteilen, bekannt, bei welchem an einem ersten Bauteil erste Fixierelemente befestigt werden, und bei welchem ein zweites Bauteil an dem ersten Bauteil befestigt wird, wobei das zweite Bauteil zweite Fixierelemente zur lösbaren Verbindung mit den ersten Fixierelementen aufweist.

Der Erfindung liegt die Aufgabe zugrunde, ein geeignetes Verfahren zum automatischen Fügen von Bauteilen, insbesondere eines kraftfahrzeugseitigen Kühlergrills mit einem Chromrahmen und/oder eines solchen mit einer Chromleiste, anzugeben. Des Weiteren soll eine hierzu besonders geeignete Montageanlage angegeben werden.

Diese Aufgabe wird bezüglich des Verfahrens durch die Merkmale des Anspruchs 1 und bezüglich der Montageanlage durch die Merkmale des Anspruchs 6 erfindungsgemäß gelöst. Vorteilhafte Weiterbildungen und Ausgestaltungen sind Gegenstand der Unteransprüche.

Hierzu ist vorgesehen, in einem ersten Schritt auf einem ersten Bauteil ein zweites Bauteil oder auf diesem ein drittes Bauteil unter Bildung eines Gesamtbauteils zu positionieren. In einem zweiten Schritt wird das Gesamtbauteil in eine, vorzugsweise im Wesentlichen horizontal, ausgerichtete Bauteilaufnahme der Montageanlage eingelegt. In einem dritten Schritt wird eine anlagenseitige Stempeleinrichtung in Richtung des Gesamtbauteils derart geführt, insbesondere vertikal abgesenkt, dass dieses in einer Endlage der Stempeleinrichtung mit einer eine Verrastung bzw. Verpressung der Bauteile bewirkenden Anpresskraft beaufschlagt wird. Dabei wird das Gesamtbauteil während des dritten Schritts in den Bereichen einer jeweiligen Verrastungsstelle durch schräge Zahnkonturen der Bauteilaufnahme mit dem ersten Bauteil entgegen der Anpresskraft abgestützt.

In vorteilhafter Weiterbildung erfolgt im Anschluss an den zweiten Schritt eine fremdkraftunterstützte Fixierung des Gesamtbauteils mittels bauteileaufnahmeseitigen Fixierelementen. Diese Fixierelemente werden bevorzugt durch pneumatisch oder hydraulisch betätigbare Zylinder gebildet, die an der dem Gesamtbauteil zugewandten Seite mit Greifern ausgerüstet sind. Nach einem manuellen oder auch durch einen Robotor unterstützten Einlegen des Gesamtbauteils in die Bauteilaufnahme sorgen diese Greifer dafür, dass zur fehlerfreien Durchführung des dritten Schrittes das Gesamtbauteilbauteil fixiert und gegenüber der Stempeleinrichtung exakt positioniert ist. Vorteilhafterweise findet die Fixierung im Bereich der Verrastung bzw. Verpressung statt. Grund hierfür ist, dass es an diesen Stellen aufgrund der Krafteinleitung bevorzugt zu einer Verschiebung des Gesamtbauteils kommen kann.

Des Weiteren ist es zweckmäßig, dass der zweite Schritt in einer Einlegestellung der Bauteilaufnahme erfolgt, die sich außerhalb des Wirkungsbereichs der Stempeleinrichtung befindet. Dabei erfolgt der dritte Schritt in einer Montagestellung der Bauteilaufnahme, während eine Überführung der Bauteilaufnahme von der Einlegestellung in die Montagestellung fremdkraftunterstützt erfolgen kann. Dies hat den Vorteil, dass in dem während der Durchführung des dritten Schrittes zeitgleich schon eine weitere Bauteilaufnahme mit einem anderen Gesamtbauteil bestückt werden kann. Außerdem ist es für einen Monteur aus ergonomischen Gründen von Vorteil, dass die Bestückung der Bauteilaufnahme außerhalb des Wirkbereichs der Stempeleinrichtung erfolgen kann, da sich die Stempeleinrichtung in Kopfhöhe befindet.

Geeigneterweise prüft ein anlagenseitiges Kamerasystem zeitlich vor oder im Anschluss an den dritten Schritt, vorzugsweise in der Einlegestellung, ob die Bauteile in deren Sollposition angeordnet sind. Das Kamerasystem ist dazu vorgesehen, das Gesamtbauteil hinsichtlich des Verrast- bzw. Verpresszustandes zu überprüfen.

Zur Kennzeichnung der fertigen Gesamtbauteile wird das verrastete bzw. verpresste Gesamtbauteil, insbesondere das durch das Kamerasystem überprüfte Gesamtbauteil, mittels eines anlageseitigen Etikettierautomaten mit einem Etikett versehen. Insbesondere in Verbindung mit dem Kamerasystem kann das für "in Ordnung" befundene Gesamtbauteil bereits in der Montageanlage mittels des integrierten Etikettierautomaten zur Rückverfolgung mit einem Etikett versehen werden.

Die Montageanlage zur Durchführung des Verfahrens umfasst eine im Wesentlichen horizontal ausgerichtete Bauteilaufnahme, die dazu vorgesehen und eingerichtet ist, eines der Bauteile oder ein vormontiertes Gesamtbauteil zu fixieren, und eine Stempeleinrichtung, die derart zur vertikalen Absenkung in eine Endlage vorgesehen und eingerichtet ist, dass in der Endlage auf das Gesamtbauteil eine auf ein Verrasten bzw. Verpressen der beteiligten Bauteile bemessene, vertikale Anpresskraft ausgeübt ist. Die Anpresskraft ist dabei derart bemessen, dass die vertikal wirkende Kraft gerade so groß ist, dass die einzelnen Bauteile sicher verrasten bzw. ausreichend verpresst werden. Ein Zerstören der Bauteile durch zu hohe Anpresskräfte, wie es z.B. bei einer manuellen Montage vorkommen kann, wird so zuverlässig vermieden.

In vorteilhafter Ausgestaltung weist die Bauteilaufnahme fremdkraftunterstützte Fixierelemente, insbesondere Zylinder, zum Fixieren des Gesamtbauteils auf. Zudem ist es zweckmäßig, wenn die Bauteilaufnahme und die Stempeleinrichtung jeweils eine Oberflächenbeschaffenheit aufweisen, die der jeweiligen Oberflächenkontur des Gesamtbauteils entspricht. Durch diese Maßnahme kann die Kraft über eine größere Oberfläche auf das Gesamtbauteil ausgeübt werden, wodurch die mechanische Belastung reduziert wird.

Des Weiteren sollte die dem Gesamtbauteil zugewandte Stempeloberfläche der Stempeleinrichtung geeigneterweise mit einer Gummibeschichtung versehen sein. Dies hat den Vorteil, dass die Chrom- und/ oder Lackbeschichtung, die empfindlich gegen jedwede Art von Fremdeinwirkung ist, nicht beschädigt wird.

Die Montageanlage weist ferner zweckmäßigerweise einen fremdkraftbetätigten Tisch auf, um die Bauteilaufnahme aus einer Einlegestellung, die sich außerhalb des Wirkungsbereichs der Stempeleinrichtung befindet, in eine Montagestellung unterhalb der Stempeleinrichtung zu überführen. Das fremdkraftbetätigte Verfahren des Tisches gewährleistet dabei, dass der Tisch bei jedem Fügevorgang in ein und dieselbe Stellung verbracht wird.

Nachfolgend wird ein Ausführungsbeispiel der Erfindung anhand einer Zeichnung näher erläutert. Darin zeigen:
- Fig. 1: in Vorderansicht eine Montageanlage mit einer absenkbaren Stempeleinrichtung und einer Bauteilaufnahme in einer seitlichen Ausgangsposition hierzu zum automatischen Verrasten eines kraftfahrzeugseitigen Kühlergrills mit einem Chromrahmen und mit einer Chromleiste,
- Fig. 2: die Montageanlage in perspektivischer Darstellung mit unterhalb der Stempeleinrichtung positionierter Bauteilaufnahme,
- Fig. 3: in einer Explosionsdarstellung zwischen der Bauteilaufnahme und der Stempeleinrichtung der Montageanlage positionierte Bauteile, und
- Fig. 4: ausschnittsweise einen Kühlergrill mit gefügtem Chromrahmen als Gesamtbauteil mit schematisch angedeuteter Bauteilaufnahme und Stempeleinrichtung in angehobener Position.

Einander entsprechende Teile sind in allen Figuren mit den gleichen Bezugszeichen versehen.

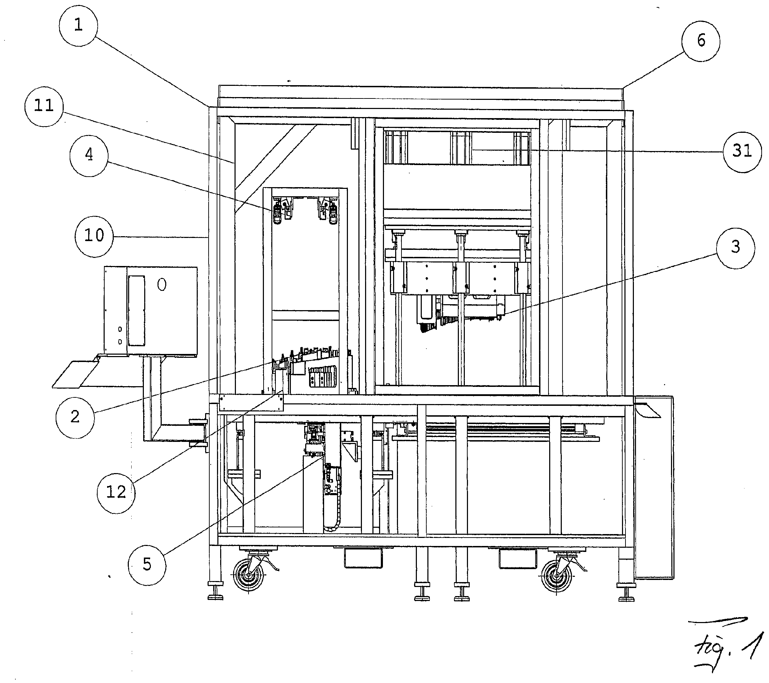

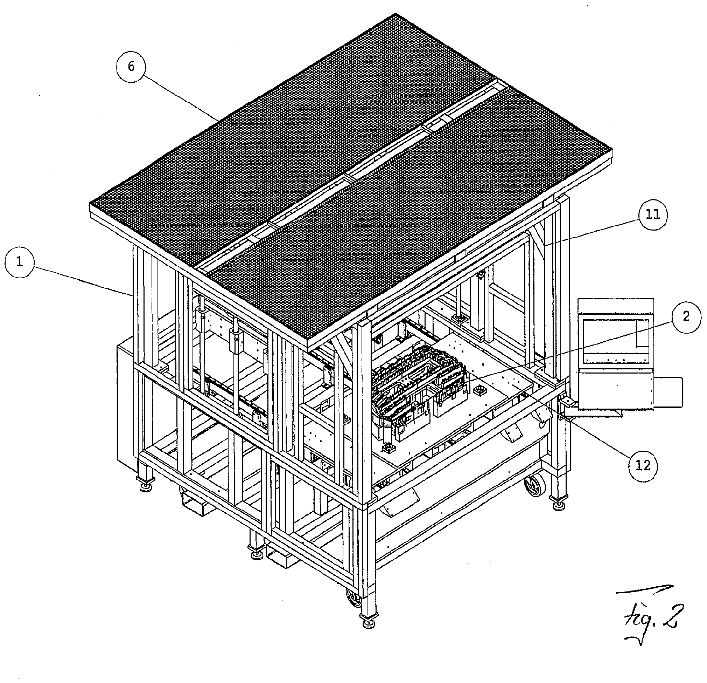

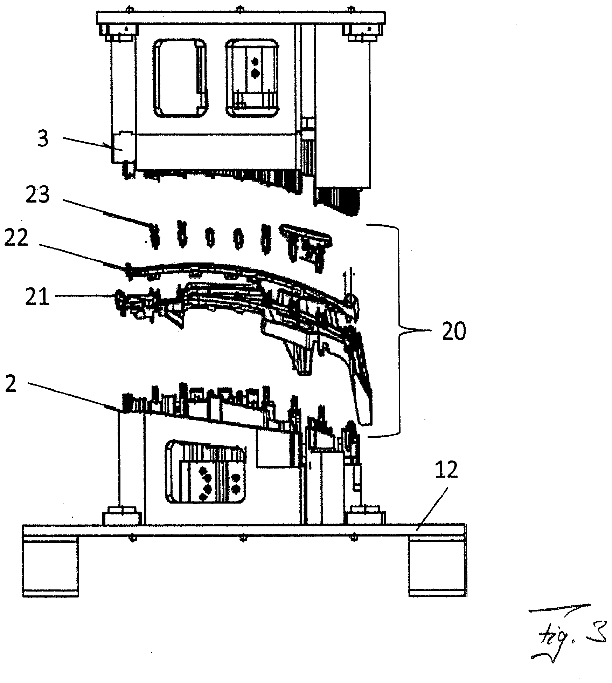

Die Figuren 1 und 2 zeigen eine frontseitig offene oder geöffnete, quaderförmige Kabine 10, in der die Komponenten einer Montageanlage 1 an einer Rahmenkonstruktion 11 angebracht sind. In etwa Hüfthöhe eines durchschnittlich großen Werkers verfügt die Montageanlage 1 über eine horizontal ausgerichtete Bauteilaufnahme 2, die dazu geeignet ist, ein Gesamtbauteil 20 (Fig. 3) mittels hydraulisch oder pneumatisch betätigbarer Fixierelemente aufzunehmen bzw. zu fixieren. Das Gesamtbauteil 20 besteht dabei aus einem Kühlerschutzgitter (Kühlergrill) 21, einem Chromrahmen 22 und gegebenenfalls Chromleisten 23, die entweder in der Bauteilaufnahme 2 oder an einem separaten, hier nicht gezeigten Montageplatz vormontiert werden.

Im Zentrum der Montageanlage 1 sind oberhalb der Bauteilaufnahme 2 Presszylinder 31 an der Rahmenkonstruktion 10 angeordnet, über die eine Stempeleinrichtung 3 vertikal abgesenkt werden kann.

Zur vereinfachten Bestückung der Bauteilaufnahme 2 mit dem Kühlerschutzgitter 20 ist die Bauteilaufnahme 2 auf einem Tisch 12 befestigt, welcher sich fremdkraftbetätigt aus einer Einlegestellung in eine Montagestellung überführen lässt. Dabei beschreibt die Montagestellung eine Position der Bauteilaufnahme 2 direkt unterhalb der Stempeleinrichtung 3 bzw. eines deren Stempel 3, und die Einlegestellung beschreibt eine Position der Bauteilaufnahme 2 außerhalb des Wirkradius der Stempeleinrichtung 3.

Zur Durchführung von Qualitätskontrollen und zur Gewährleistung eines einwandfreien Betriebs ist die Montageanlage 1 mit einem Kamerasystem 4 ausgerüstet, welches die in der Bauteilaufnahme 2 fixierten Gesamtbauteile 20 vor und nach einem Montageschritt optisch überprüft.

Zur Kennzeichnung bestimmungsgemäß gefügter Bauteile 21, 22, 23 ist die Montageanlage 1 mit einem Etikettierautomaten 5 ausgerüstet, der unterhalb der Bauteilaufnahme 2 angeordnet ist. Die Aufbringung eines Etiketts an dem Gesamtbauteil 20 erfolgt dabei mittels eines Blaskopfs.

Zur Montage von geometrisch unterschiedlichen Gesamtbauteilen 20 verfügt die Montageanlage 1 über an die verschiedenen Komponenten des Gesamtbauteils 20 angepasste Bauteilaufnahmen 2 und Stempeleinrichtungen 3. Je nach Gesamtbauteil 20 wird die Montageanlage 1 umgerüstet, wobei die verschiedenen Stempeleinrichtungen 3 in einem Stempelwechsellager 6 oberhalb der Presszylinder 31 untergebracht sind.

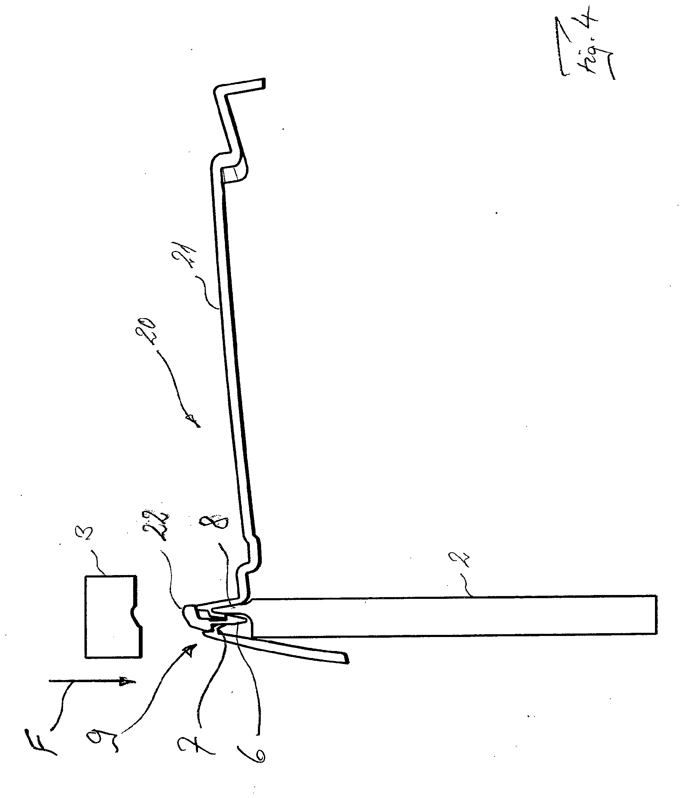

Fig. 4 zeigt ausschnittsweise das Kühlerschutzgitter 21 mit gefügtem Chromrahmen 22 als Gesamtbauteil mit schematisch angedeuteter Bauteilaufnahme 2 und Stempeleinrichtung 3 nach erfolgter Verrastung eines chromrahmenseitigen Rasthakens 6 mit einer kühlergrillseitigen Rast- oder Fügekontur 7. Das Kühlerschutzgitter 21 mit vormontiertem, d. h. aufgelegtem Chromrahmen 22 ist an einer schrägen Zahnkontur 8 der Bauteilaufnahme 2 im Bereich der jeweiligen Verrastungsstelle 9 ist abgestützt. Dadurch wird im Zuge der mittels der Stempeleinrichtung 3 von oben ausgeübten Anpresskraft F das Kühlerschutzgitter 21 an der Verrastungsstelle 9 überdrückt, so dass aufgrund des Gegendruck, d. h. der von der Bauteilaufnahme 2 der Anpresskraft F entgegenwirkenden Gegenkraft von unten zwingend eine zuverlässige Verrastung zwischen dem chromrahmenseitigen Rasthaken 6 mit der kühlergrillseitigen Rast- oder Fügekontur 7 erfolgt.

### Bezugszeichenliste

- 1: Montageanlage
- 10: Kabine
- 11: Rahmenkonstruktion
- 12: Tisch
- 2: Bauteilaufnahme
- 20: Gesamtbauteil
- 21: erstes Bauteil in Form eines Kühlergrills
- 22: zweites Bauteil in Form eines Chromrahmens
- 23: drittes Bauteil in Form einer Chromleiste
- 3: Stempeleinrichtung
- 31: Presszylinder
- 4: Kamerasystem
- 5: Etikettierautomat
- 6: Rasthaken
- 7: Rastkontur
- 8: Zahnkontur
- 9: Verrastungsstelle
- F: Anpresskraft

## Patentansprüche

1. Verfahren zum automatischen Fügen von Bauteilen (21, 22, 23), insbesondere eines kraftfahrzeugseitigen Kühlergrills (21) mit einem Chromrahmen (22) und/oder eines solchen mit einer Chromleiste (23), in einer Montageanlage (1),
- bei dem in einem ersten Schritt auf einem ersten Bauteil (21) ein zweites Bauteil (22) oder auf diesem ein drittes Bauteil (23) unter Bildung eines Gesamtbauteils (20) positioniert wird,
- bei dem in einem zweiten Schritt das Gesamtbauteil (20) in eine, vorzugsweise im Wesentlichen horizontal ausgerichtete, Bauteilaufnahme (2) der Montageanlage (1) eingelegt wird, und
- bei dem in einem dritten Schritt eine anlagenseitige Stempeleinrichtung (3) in Richtung des Gesamtbauteils (20) derart geführt, insbesondere vertikal abgesenkt, wird, dass dieses in einer Endlage der Stempeleinrichtung (3) mit einer eine Verrastung bzw. Verpressung der Bauteile (21, 22, 23) bewirkenden Anpresskraft (F) beaufschlagt wird,
**dadurch gekennzeichnet,**
**dass** das Gesamtbauteil (20) während des dritten Schritts in den Bereichen einer jeweiligen Verrastungsstelle (9) durch schräge Zahnkonturen (8) der Bauteilaufnahme (2) mit dem ersten Bauteil (21) entgegen der Anpresskraft (F) abgestützt wird.

2. Verfahren nach Anspruch 1,
**dadurch gekennzeichnet,**
**dass** im Anschluss an den zweiten Schritt eine fremdkraftunterstützte Fixierung des Gesamtbauteils (20) mittels bauteileaufnahmeseitigen Fixierelementen erfolgt.

3. Verfahren nach Anspruch 1 oder 2,
**dadurch gekennzeichnet,**
- **dass** der zweite Schritt in einer Einlegestellung der Bauteilaufnahme (2) erfolgt, die sich außerhalb des Wirkungsbereichs der Stempeleinrichtung (3) befindet, und
- **dass** der dritte Schritt in einer Montagestellung der Bauteilaufnahme (2) erfolgt, wobei eine Überführung der Bauteilaufnahme (2) von der Einlegestellung in die Montagestellung fremdkraftunterstützt erfolgt.

4. Verfahren nach einem der Ansprüche 1 bis 3,
**dadurch gekennzeichnet,**
**dass** vor oder im Anschluss an den dritten Schritt, vorzugsweise in der Einlegestellung, ein anlagenseitiges Kamerasystem (4) prüft, ob die Bauteile (21, 22, 23) in deren Sollposition angeordnet sind.

5. Verfahren nach einem der Ansprüche 1 bis 4,
**dadurch gekennzeichnet,**
**dass** das verrastete bzw. verpresste Gesamtbauteil (20), insbesondere das durch das Kamerasystem (4) überprüfte Gesamtbauteil (20), zum Zwecke einer Rückverfolgung mittels eines anlageseitigen Etikettierautomaten (5) mit einem Etikett versehen wird.

6. Montageanlage (1) zur Durchführung des Verfahrens nach einem der Ansprüche 1 bis 5,
**gekennzeichnet durch**
- eine im Wesentlichen horizontal ausgerichtete Bauteilaufnahme (2), die dazu vorgesehen und eingerichtet ist, eines der Bauteile (21) oder ein vormontiertes Gesamtbauteil (20) zu fixieren und im Bereich dessen Verrastungsstellen (9) mittels Zahnkonturen (8) abzustützen, und
- eine Stempeleinrichtung (3), die derart zur vertikalen Absenkung in eine Endlage vorgesehen und eingerichtet ist, dass in der Endlage auf das Gesamtbauteil (20) eine auf ein Verrasten bzw. Verpressen der beteiligten Bauteile (21, 22, 23) bemessene Vertikalkraft ausgeübt ist.

7. Montageanlage (1) nach Anspruch 6,
**dadurch gekennzeichnet,**
**dass** die Bauteilaufnahme (2) fremdkraftunterstützte Fixierelemente, insbesondere Zylinder, zum Fixieren des Gesamtbauteils (20) aufweist.

8. Montageanlage (1) nach Anspruch 6 oder 7,
**dadurch gekennzeichnet,**
**dass** die dem Gesamtbauteil (20) zugewandte Stempeloberfläche der Stempeleinrichtung (3) mit einer Gummibeschichtung versehen ist, die eine Oberflächenbeschaffenheit aufweist, die der Oberflächenkontur des Gesamtbauteils (20) entspricht.

9. Montageanlage (1) nach Anspruch 8,
**dadurch gekennzeichnet,**
**dass** ein Stempelwechsellager (6) mit einer Anzahl von hinsichtlich der Stempeloberfläche unterschiedlichen Stempeleinrichtungen (3) zur Auswechselung der Stempeleinrichtung (3) vorgesehen ist.

10. Montageanlage (1) nach einem der Ansprüche 6 bis 9,
**gekennzeichnet durch**
einen fremdkraftbetätigten Tisch (12), der dazu vorgesehen und eingerichtet ist, die Bauteilaufnahme (2) aus einer Einlegestellung, die sich außerhalb des Wirkungsbereichs der Stempeleinrichtung (3) befindet, in eine Montagestellung unterhalb der Stempeleinrichtung (3) zu überführen.

11. Montageanlage (1) nach einem der Ansprüche 6 bis 10,
**gekennzeichnet durch**
ein Kamerasystem (4), dass dazu vorgesehen und eingerichtet ist, das Gesamtbauteil (20) hinsichtlich des Verrast- bzw. Verpresszustandes zu überprüfen.

12. Montageanlage (1) nach einem der Ansprüche 6 bis 11,
**gekennzeichnet durch**
einen Etikettierautomat (5), der dazu eingerichtet und vorgesehen ist, das verrastete bzw. verpresste, und insbesondere mittels des Kamerasystems (4) überprüfte, Gesamtbauteil (20) mit einem Etikett zu versehen.

## Claims

1. Method for automatically joining components (21, 22, 23), in particular of a motor vehicle-side radiator grille (21) with a chrome frame (22) and/or of such radiator grille with a chrome strip (23), in an assembly installation (1),
- in which, in a first step, a second component (22) is positioned on a first component (21) or a third component (23) is positioned on said second component (22) to form a complete component (20),
- in which, in a second step, the complete component (20) is inserted into a preferably substantially horizontally-oriented component receptacle (2) of the assembly installation (1), and
- in which, in a third step, an installation-side stamping device (3) is guided in the direction of the complete component (20), in such a way, in particular as to vertically lower, that in an end position of the stamping device (3), said complete component (20) is acted upon by a pressing force (F), which causes the components (21, 22, 23) to latch or respectively to press,
**characterized in**
**that**, during the third step, in the regions of a respective latching point (9) the complete component (20) is supported against the pressing force (F) by means of tooth contours (8) of the component receptacle (2) with the first component (21).

2. Method according to claim 1,
**characterized in**
**that**, following the second step, a fixing of the complete component (20), that is supported by an external force, is carried out by means of fixing elements on the component-receiving side.

3. Method according to claim 1 or 2,
**characterized in**
- **that** the second step is carried out in an insertion position of the component receptable (2), which is disposed outside the effective range of the stamping device (3), and
- **that** the third step is carried out in an assembly position of the component receptable (2), wherein the component receptable (2) is transferred from the insertion position to the assembly position with the support of an external force.

4. Method according to one of claims 1 to 3,
**characterized in**
**that** before or following the third step, preferably in the insertion position, an installation-side camera system (4) checks whether the components (21, 22, 23) are arranged in their desired position.

5. Method according to one of claims 1 to 4,
**characterized in**
**that** for the purpose of tracking, the latched or respectively pressed complete component (20), said complete component (20) in particular having been checked by the camera system (4), is provided with a label by means of an installation-side automatic labeller (5).

6. Assembly installation (1) for carrying out the method according to one of the claims 1 to 5,
**characterized by**
- a substantially horizontally-oriented component receptable (2), which is provided and configured to fix one of the components (21) or a pre-assembled complete component (20) and to support it in the region of latching points (9) by means of tooth contours (8), and
- a stamping device (3), which is provided and configured so as to vertically lower into an end position in such a way that in the end position a vertical force dimensioned for latching or respectively pressing the components (21, 22, 23) involved is exerted on the complete component (20).

7. Assembly installation (1) according to claim 6,
**characterized in**
**that** the component receptable (2) comprises fixing elements that are supported by an external force, in particular cylinders, for fixing the complete component (20).

8. Assembly installation (1) according to claim 6 or 7,
**characterized in**
**that** the stamping surface of the stamping device (3) facing the complete component (20) is provided with a rubber coating, which has a surface characteristic corresponding to the surface contour of the complete component (20).

9. Assembly installation (1) according to claim 8,
**characterized in**
**that** a stamp exchange bearing (6) with a number of different stamping devices (3) with regard to the stamping surface is provided for exchanging the stamping device (3).

10. Assembly installation (1) according to one of claims 6 to 9,
**characterized by**
a table (12) actuated by an external force, which is provided and configured to transfer the component receptable (2) from an insertion position, which is outside the effective range of the stamping device (3), to an assembly position below the stamping device (3).

11. Assembly installation (1) according to one of claims 6 to 10,
**characterized by**
a camera system (4), which is provided and configured to check the complete component (20) with regard to the latching state or respectively pressing state.

12. Assembly installation (1) according to one of the claims 6 to 11,
**characterized by**
an automatic labeller (5), which is configured and intended to provide the complete component (20) with a label, the complete component (20) having been latched or respectively pressed and in particular checked by means of the camera system (4).

## Revendications

1. Procédé pour le montage automatique de composants (21, 22, 23), en particulier d'une grille (21) côté véhicule automobile avec un cadre chromé (22) et/ou d'une telle grille avec une bande chromée (23), dans une installation de montage (1),
- dans lequel, dans une première étape, un deuxième composant (22) est positionné sur un premier composant (21) ou un troisième composant (23) est positionné sur ledit deuxième composant (22) pour former un composant complet (20),
- dans lequel, dans une deuxième étape, le composant complet (20) est inséré dans un réceptacle de composant (2) de l'installation de montage (1), qui de préférence est orienté sensiblement horizontalement, et
- dans lequel, dans une troisième étape, un dispositif de poinçonnage (3) côté installation est guidé en direction de le composant complet (20), de telle sorte, notamment en s'abaissant verticalement, que dans une position finale du dispositif de poinçonnage (3), ledit composant complet (20) est soumis à une force de pression (F), qui provoque l'encliquetage ou respectivement le pressage ultérieur des éléments (21, 22, 23),
**caractérisé en ce**
**que**, lors de la troisième étape, dans les zones d'un point d'encliquetage respectif (9), le composant complet (20) est soutenu contre la force de pression (F) au moyen des contours de dents (8) du réceptacle de composant (2) avec le premier élément (21).

2. Procédé selon la revendication 1,
**caractérisé en ce**
**qu'**à la suite de la deuxième étape, la fixation du composant complet (20) soutenu par une force extérieure est effectuée au moyen d'éléments de fixation sur le côté de la réception de le composant.

3. Procédé selon la revendication 1 ou 2,
**caractérisé en ce**
- **que** la deuxième étape est effectuée dans une position d'insertion du réceptacle de composant (2), qui est en dehors de la zone d'action du dispositif de poinçonnage (3), et
- **que** la troisième étape est réalisée dans une position de montage du réceptacle de composant (2), le réceptacle de composant (2) étant transféré de la position d'insertion à la position de montage avec la soutenu d'une force extérieure.

4. Procédé selon l'une des revendications 1 à 3,
**caractérisé en ce**
**qu'**avant ou à la suite de la troisième étape, de préférence en position d'insertion, un système de caméra (4) côté installation vérifie si les composants (21, 22, 23) sont disposés dans leur position souhaitée.

5. Procédé selon l'une des revendications 1 à 4,
**caractérisé en ce**
**qu'**au fins d'un suivi, le composant complet (20) verrouillé ou pressé, qui est en particulier vérifié par le système de caméra (4), est muni d'une étiquette au moyen d'une étiqueteuse automatique (5) située côté installation.

6. Installation de montage (1) pour la réalisation le procède selon l'une des revendications 1 à 5,
**caractérisé par**
- un réceptacle de composant (2) orienté sensiblement horizontalement, qui est prévu et configuré pour fixer l'un des composants (21) ou un composant complet (20) préassemblé et pour soutenir ses points d'encliquetage (9) dans la région au moyen de contours de dents (8), et
- un dispositif de poinçonnage (3), qui est prévu et configuré de manière à s'abaisser verticalement dans une position finale de telle sorte que, dans la position finale, une force verticale dimensionnée pour le verrouillage ou respectivement le presage des composants (21, 22, 23) concernés s'exerce sur le composant complet (20).

7. Installation de montage (1) selon la revendication 6,
**caractérisé en ce**
**que** le réceptacle de composant (2) comprend des éléments de fixation soutenus par une force extérieure, en particulier des cylindres, pour fixer le composant complet (20).

8. Installation de montage (1) selon la revendication 6 ou 7,
**caractérisé en ce**
**que** la surface de poinçonnage du dispositif de poinçonnage (3) tournée vers le composant complet (20) est pourvue d'un revêtement en caoutchouc, dont la caractéristique de surface correspond au contour de la surface de le composant complet (20).

9. Installation de montage (1) selon la revendication 8,
**caractérisé en ce**
**qu'**un palier d'échange de poinçonnage (6) avec plusieurs dispositifs de poinçonnage (3), qui sont différents par rapport à la surface de poinçonnage, est prévu pour l'échange du dispositif de poinçonnage (3).

10. Installation de montage (1) selon l'une des revendications 6 à 9,
**caractérisé par**
une table (12) actionnée par une force extérieure, qui est prévue et configurée pour transférer le réceptacle de composant (2) d'une position d'insertion, qui est en dehors de la zone d'action du dispositif de poinçonnage (3), à une position de montage en dessous du dispositif de poinçonnage (3).

11. Installation d'montage (1) selon l'une des revendications 6 à 10,
**caractérisé par**
un système de caméra (4), qui est prévu et configuré pour vérifier le composant complet (20) en ce qui concerne l'état de verrouillage ou respectivement l'état de pressage.

12. Installation de montage (1) selon l'une des revendications 6 à 11,
**caractérisé par**
une étiqueteuse automatique (5), qui est configurée et destinée à munir le composant complet (20) d'une étiquette, le composant complet (20) étant verrouillé ou respectivement pressé, et en particulier vérifié au moyen du système de caméra (4).
